# FASCICULE DE BREVET EUROPEEN

(11) **EP 3 035 639 B1**
(45) Date de publication et mention de la délivrance du brevet: **19.06.2019**
(21) Numéro de dépôt: 15201439.5
(22) Date de dépôt: 18.12.2015
(51) Int. Cl.: H04L 29/06

(54) **PROCÉDÉ DE DÉTECTION DE BALAYAGE DE PORTS NON-AUTORISÉ DANS UN RÉSEAU INFORMATIQUE, PRODUIT PROGRAMME D'ORDINATEUR ET DISPOSITIF ASSOCIÉS**
VERFAHREN ZUR ERKENNUNG VON NICHT AUTORISIERTEM PORT-SCANNING IN EINEM COMPUTER-NETZWERK, ENTSPRECHENDES COMPUTERPROGRAMMPRODUKT UND ENTSPRECHENDE VORRICHTUNG
METHOD OF UNAUTHORIZED PORT-SCAN DETECTION IN A COMPUTER NETWORK, ASSOCIATED COMPUTER PROGRAM AND DEVICE

(30) Priorité: 18.12.2014 FR 1402917
(43) Date de publication de la demande: 22.06.2016
(73) Titulaire: THALES, 92400 Courbevoie (FR)
(72) Inventeur: NOGUES, Damien, 92622 GENNEVILLIERS CEDEX (FR)
(74) Mandataire: Lavoix

(56) Documents cités:
- US-B1- 8 516 573
- MANSOUR ALSALEH ET AL: "Network scan detection with LQS", INFORMATION, COMPUTER AND COMMUNICATIONS SECURITY, ACM, 2 PENN PLAZA, SUITE 701 NEW YORK NY 10121-0701 USA, 22 mars 2011 (2011-03-22), pages 102-113, XP058002602, DOI: 10.1145/1966913.1966928 ISBN: 978-1-4503-0564-8
- Joris Kinable: "Detection of network scan attacks using flow data", , 23 juin 2008 (2008-06-23), pages 1-9, XP055226938, Extrait de l'Internet: URL:http://referaat.cs.utwente.nl/conferen ce/9/paper/6922/detection-of-network-scan- attacks-using-flow-data.pdf [extrait le 2015-11-09]
- MAGGIE CHENG ET AL: "Visualizing graph features for fast port scan detection", 20130108; 20130108 - 20130110, 8 janvier 2013 (2013-01-08), pages 1-4, XP058014708, DOI: 10.1145/2459976.2460010 ISBN: 978-1-4503-1687-3

## Description

La présente invention concerne un procédé de détection de balayage de ports non-autorisé dans un réseau informatique. Un tel procédé est notamment utilisable pour prévenir une attaque informatique dans un tel réseau.

Le réseau informatique est constitué d'une pluralité de terminaux de communication aptes à communiquer entre eux via une pluralité de ports de communication. De manière générale, chaque port de communication est associé à un service ou plus généralement à un logiciel du terminal correspondant, et permet à un logiciel distant d'accéder à ce logiciel pour échanger des données numériques via le réseau informatique.

Pour gérer l'accès au logiciel associé, chaque port de communication comprend un état de fonctionnement, dit ouvert, dans lequel il est apte à recevoir des connexions entrantes à partir d'un terminal distant, et un état de fonctionnement, dit fermé, dans lequel il rejette systématiquement toute connexion entrante à partir d'un tel terminal.

Certains ports de communication comprennent en outre un état de fonctionnement, dit filtré, dans lequel ils sont aptes à recevoir uniquement des connexions entrantes à partir d'une liste prédéterminée de terminaux dans le réseau. Pour les terminaux ne faisant pas partie de cette liste, un port dans l'état filtré n'envoie rien en réponse à la connexion initiée.

Dans le domaine de l'informatique, le balayage de ports, connu également dans l'état de la technique sous le terme anglais « Port Scan », est une technique permettant de déterminer, pour un ensemble donné d'adresses IP (de l'anglais « Internet Protocol »), lesquelles correspondent à des terminaux existants, ainsi que des informations relatives à ces terminaux à partir d'un terminal distant via le réseau. Ces informations peuvent comprendre notamment la version du système d'exploitation utilisé sur chacun des terminaux ciblés, les noms et les versions des différents services offerts par ces terminaux ainsi que l'ensemble de ports ouverts et fermés pour ces terminaux.

Cette technique consiste généralement à envoyer vers chaque port des terminaux ciblés, un flux de données et à analyser ensuite les flux reçus en réponse aux flux envoyés ou l'absence de telles réponses. En particulier, lors de cette analyse, les ports ayant rejeté ou ignoré la connexion initiée sont considérés comme fermés. Les ports ayant confirmé la connexion initiée, sont alors considérés comme ouverts.

Le balayage de ports est utilisé par exemple par les administrateurs du réseau afin de contrôler sa sécurité mais aussi par les pirates informatiques afin de préparer une attaque informatique sur au moins certains des terminaux du réseau. Dans ce dernier cas, il s'agit d'un balayage de ports non-autorisé.

Le balayage de ports non-autorisé est ainsi largement utilisé par les pirates informatiques pour préparer une attaque informatique via l'un ou plusieurs ports ouverts déterminés lors de ce balayage.

La détection de balayage de ports non-autorisé constitue donc un problème technique important dans la lutte contre la piraterie informatique.

Différentes méthodes de détection d'un tel balayage existent déjà dans l'état de la technique.

La majorité de ces méthodes proposent de détecter des balayages de ports dans le réseau de manière centralisée, c'est-à-dire à partir d'un terminal central dédié au moins en partie à cet objectif.

Ceci est particulièrement le cas des réseaux privés connectés à un ou plusieurs réseaux publics via un terminal central du type « pare-feu » (« firewall » en anglais) gérant l'ensemble de flux entrant ou sortant dans ou du réseau privé.

Selon les méthodes existantes, pour détecter des balayages de ports, le terminal central analyse l'ensemble de connexions initiées par un même terminal et identifié par son adresse IP, vers un grand nombre de terminaux et/ou de ports dans le réseau privé.

Ainsi, par exemple, lorsque le nombre de ces connexions dépasse un seuil prédéterminé, le terminal central lève une alerte pour avertir les administrateurs du réseau d'un éventuel balayage de ports ou filtre les connexions ultérieures issues de cette adresse.

Une telle méthode de détection de balayage de ports non-autorisé est décrite par exemple dans US 8 516 573 B1.

Toutefois, la mise en oeuvre des méthodes existantes requiert de la part du terminal central, une grande quantité de ressources matérielles disponibles pour stocker et analyser les informations concernant l'ensemble de connexions initiées vers tous les autres terminaux dépendant de ce terminal central. Ceci ne permet généralement pas de garder un historique suffisamment long de ces connexions pour détecter notamment des balayages de ports étalés dans le temps. Souvent ces méthodes ne permettent pas non plus de détecter les balayages « distribués », c'est-à-dire issus de plusieurs terminaux.

La présente invention a pour but de proposer un procédé de détection de balayage de ports non-autorisé permettant de remédier à ces inconvénients.

À cet effet, l'invention a pour objet un procédé de détection de balayage de ports non-autorisé conforme à la revendication 1.

Suivant d'autres aspects avantageux de l'invention, le procédé comprend une ou plusieurs des caractéristiques des revendications 2 à 12, prise(s) isolément ou suivant toutes les combinaisons techniquement possibles.

La présente invention a également pour objet un produit programme d'ordinateur comportant des instructions logicielles qui, lorsqu'elles sont mises en oeuvre par un ordinateur, mettent en oeuvre ce procédé.

La présente invention a également pour objet un dispositif d'analyse pour détecter de balayage de ports non-autorisé conforme à la revendication 14.

L'invention sera mieux comprise à la lecture de la description qui va suivre, donnée uniquement à titre d'exemple, et faite en se référant aux dessins annexés, sur lesquels :
- la figure 1 est une vue schématique d'un réseau informatique comportant une pluralité de terminaux de communication, au moins certains de ces terminaux mettant en oeuvre le procédé de détection de balayage de ports selon l'invention ;
- la figure 2 est une vue schématique détaillée d'un terminal de la figure 1 ;
- la figure 3 est une vue schématique détaillée d'un autre terminal de la figure 1, le terminal comportant au moins une partie d'une base d'informations de sécurité ;
- la figure 4 est une vue schématique de la base d'informations de la figure 3 ;

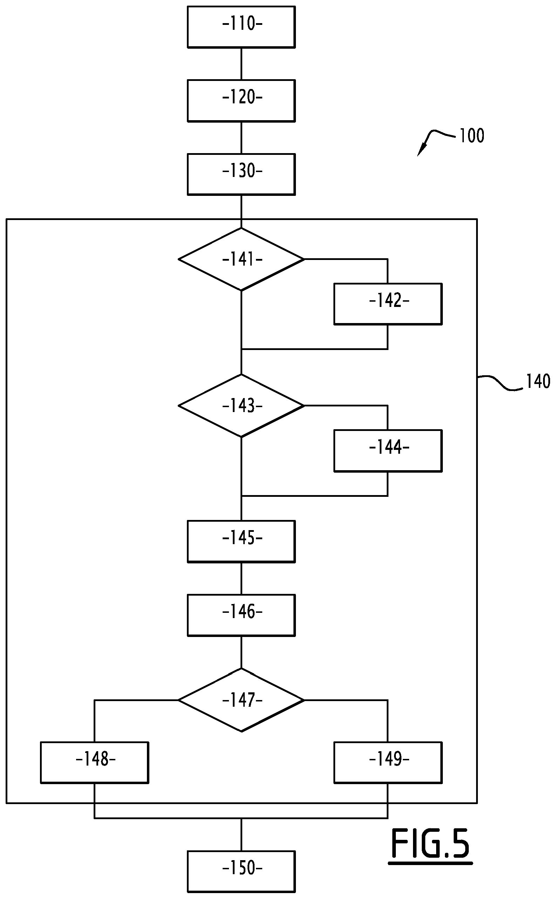

- la figure 5 est un organigramme du procédé selon l'invention ; et
- la figure 6 est un organigramme d'une étape du procédé de la figure 5 selon un aspect avantageux de l'invention.

Le réseau informatique 10 comporte une pluralité de terminaux 11, 12A à 12E de communication reliés entre eux par des liaisons informatiques filaires ou sans fil, et aptes à communiquer entre eux en échangeant de données informatiques.

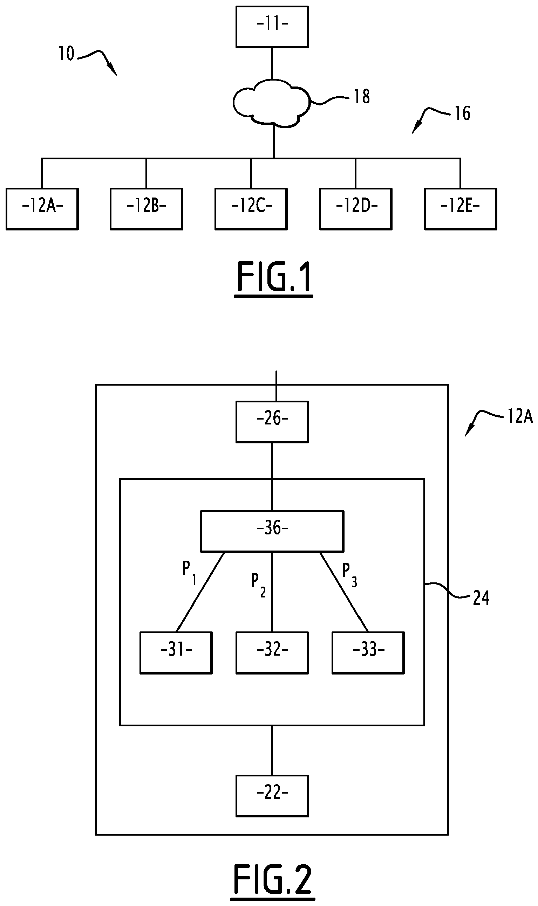

Dans l'exemple de réalisation illustré sur la figure 1, le réseau informatique 10 comprend un réseau privé 16 formé par les terminaux 12A à 12E, et un réseau public 18 raccordé au réseau privé 16 et comportant notamment le terminal 11.

Le réseau public 18 est, par exemple, Internet. Un tel réseau public 18 comporte une pluralité d'autres terminaux de communication non-illustrés sur la figure 1.

Le réseau privé 16 est, par exemple, un réseau local raccordant les terminaux 12A à 12E pour connecter chacun entre eux au réseau public 18.

Le réseau privé 16 comporte avantageusement des moyens de protection des terminaux 12A à 12E contre des attaques informatiques provenant d'un terminal du réseau public 18, par exemple du terminal 11.

Toutefois, la présente invention est applicable à toute autre structure du réseau informatique techniquement possible, et la figure 1 ne représente qu'un exemple d'une telle structure.

Ainsi, selon un exemple de réalisation (non-illustré), le réseau privé 16 est raccordé au réseau public 18 via un terminal central contrôlant l'ensemble des flux de données sortant ou entrant du ou dans le réseau privé 16. Ce terminal central comporte avantageusement des moyens de protection permettant de détecter et arrêter au moins une partie d'attaques informatiques provenant d'un terminal du réseau public 18 vers l'un des terminaux 12A à 12D du réseau privé.

Selon encore un autre exemple de réalisation (non-illustré), l'ensemble des terminaux 11, 12A à 12E font partie d'un même réseau public ou privé.

Chaque terminal 11, 12A à 12E est associé à un identifiant ID₁ permettant de le distinguer de façon unique et certaine dans le réseau 10. Un tel identifiant ID₁ correspond par exemple à l'adresse IP (de l'anglais « Internet Protocol ») du terminal 11, 12A à 12E correspondant attribuée lors de son raccordement au réseau 10, ou encore à l'adresse physique MAC (de l'anglais « Media Access Control ») déterminée à partir des composantes électroniques formant ce terminal.

Les terminaux 11, 12A à 12E sont par exemple des ordinateurs ayant tous un ensemble de composantes sensiblement similaires. Ainsi, ces composantes similaires seront expliquées par la suite à l'aide d'un exemple de réalisation du terminal 12A illustré sur la figure 2.

Comme illustré sur cette figure 2, le terminal 12A comporte une unité de calcul 22 tel qu'un processeur, une unité de mémorisation 24 et une unité de raccordement 26 au réseau 10.

L'unité de raccordement 26 permet notamment d'échanger des données informatiques entre le terminal 12A et d'autres terminaux 11, 12B à 12E via le réseau 10. L'unité de raccordement 26 comprend par exemple une carte réseau connue en soi.

L'unité de mémorisation 24 est apte à mémoriser des données informatiques et plus particulièrement, des logiciels exécutables par l'unité de calcul 22.

En particulier, l'unité de mémorisation 24 est apte à mémoriser des logiciels réseau 31 à 33 propres à communiquer avec d'autres logiciels réseau des terminaux 11, 12B à 12E.

L'unité de mémorisation 24 est apte à mémoriser en outre un logiciel de pilotage 36 de connexions avec les autres terminaux 11, 12B à 12E du réseau 10.

Le logiciel de pilotage 36 permet d'établir une connexion entre l'un des logiciels réseau 31 à 33 avec au moins un autre logiciel réseau d'au moins un terminal 11, 12B à 12E pour échanger des données informatiques entre ces logiciels réseau via le réseau 10.

Pour ce faire, le logiciel de pilotage 36 est apte à définir pour chaque logiciel réseau 31 à 33, un port de communication P₁ à P₃.

Un tel port de communication est associé à un identifiant ID₂ permettant de l'identifier de façon unique et certaine au sein du terminal 12A correspondant. Cet identifiant comprend par exemple un numéro exprimé sur 16 bits et variant donc entre 0 et 65 535.

Ainsi, lorsqu'une connexion est demandée par un logiciel réseau distant exécuté par exemple par l'unité de calcul du terminal 11, vers l'un des logiciels réseau 31 à 33, par exemple vers le logiciel 31, le logiciel distant est apte à initier une connexion en émettant des données informatiques vers le logiciel réseau 31 et en y intégrant l'identifiant ID₂ associé au port P₁ correspondant à ce logiciel 31.

Dans ce cas, le terminal 11 est un terminal initiateur, et le terminal 12A est un terminal récepteur.

La connexion est initiée selon un protocole de communication connu en soi tel que TCP/IP ou encore UDP.

Les données informatiques sont transmises par exemple sous la forme de paquets de données. Chaque paquet comprend un entête comportant notamment des informations sur le terminal destinataire telles que l'identifiant ID₁ de ce terminal ou encore l'identifiant ID₂ du port vers lequel ce paquet est destiné.

À la réception des données informatiques, le logiciel de pilotage 36 est apte à reconnaître l'identifiant ID₂ intégré dans ces données, et à transmettre les données reçues vers le logiciel réseau 31 via le port P₁ correspondant à cet identifiant ID₂.

Le logiciel de pilotage 36 est apte à définir en outre l'état de fonctionnement pour chaque port P₁ à P₃ parmi les états ouvert, fermé ou filtré.

Lorsqu'un port P₁ à P₃ est dans son état ouvert, le logiciel de pilotage 36 est apte à établir une connexion initiée par un logiciel distant entre ce logiciel distant et le logiciel 31 à 33 correspondant à ce port P₁ à P₃.

Lorsqu'un port P₁ à P₃ est dans son état fermé, le logiciel de pilotage 36 est apte à rejeter toute connexion initiée par un logiciel distant vers ce port P₁ à P₃. Ceci est, par exemple, le cas lorsqu'aucun logiciel n'est associé au port P₁ à P₃ vers lequel la connexion a été initiée.

Lorsqu'un port P₁ à P₃ est dans son état filtré, il est dans l'état ouvert uniquement pour certains terminaux du réseau 10 selon par exemple une liste d'identifiants ID₂ de ces terminaux prédéterminée. Pour les connexions initiées à partir des autres terminaux, un port dans l'étant filtré n'envoie aucune réponse. Ainsi, par exemple, le port P₂ est dans l'état ouvert pour toutes les connexions initiées à partir des terminaux 12B à 12E du réseau privé 16, et n'envoie aucune réponse aux connexions initiées à partir des terminaux du réseau public 18.

Chacun des terminaux 11, 12B à 12E comporte un ensemble de composantes similaires à celles du terminal 12A et décrites précédemment, telles que l'unité de calcul 22, l'unité de mémorisation 24, l'unité de raccordement 26 ou encore les logiciels réseau 31 à 33 et le logiciel de pilotage de connexions 36.

En particulier, le logiciel de pilotage de connexions 36 de chacun des terminaux 11, 12B à 12E est apte à définir une pluralité de ports de communication P₁ à P₃ et à associer chacun de ces ports P₁ à P₃ à l'un des logiciels réseau 31 à 33 mémorisé dans l'unité de mémorisation 24.

Comme dans le cas précédent, chacun des ports P₁ à P₃ est associé à un identifiant ID₂ unique au sein du terminal 11, 12B à 12E correspondant. Au moins certains des identifiants ID₂ associés aux logiciels réseau 31 à 33 ayant des fonctions similaires dans les terminaux 11, 12A à 12E différents, sont identiques.

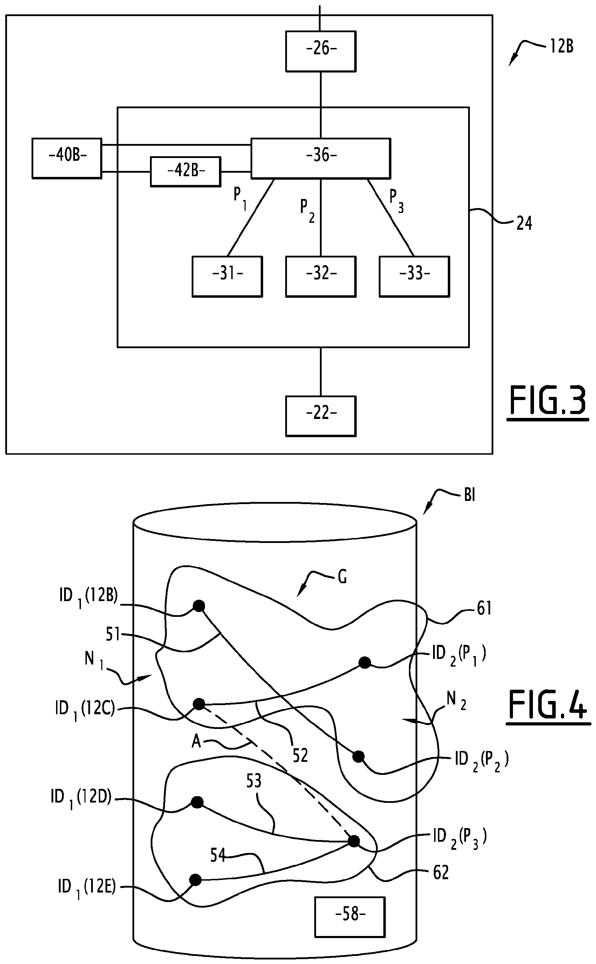

À la différence du terminal 12A, chacun des terminaux 12B à 12E comporte en outre un dispositif 40B à 40E d'analyse de connexions initiées, et une mémoire 42B partagée allouée dans l'unité de mémorisation 24. Ceci est montré sur la figure 3 illustrant un exemple de réalisation du terminal 12B.

L'ensemble des dispositifs d'analyse de connexions initiées 40B à 40E met en oeuvre un procédé de détection de balayage de ports non-autorisé selon l'invention.

Chaque dispositif 40B à 40E se présente par exemple sous la forme d'un logiciel mémorisé dans l'unité de mémorisation 24 correspondante ou sous la forme d'une composante électronique intégrée par exemple dans l'unité de raccordement 26 correspondante.

Chaque dispositif 40B à 40E est apte à détecter chaque connexion initiée par un terminal initiateur 11, 12A à 12E, vers l'un des ports P₁ à P₃ du terminal 12B à 12E correspondant à ce dispositif 40B à 40E.

Chaque dispositif 40B à 40E est apte en outre à identifier parmi l'ensemble des connexions initiées, chaque connexion rejetée par au moins un port P₁ à P₃ du terminal 12B à 12E correspondant.

Une connexion est rejetée lorsqu'elle est initiée vers un port P₁ à P₃ étant dans l'état fermé ou un port P₁ à P₃ étant dans l'état filtré dont le filtre n'accepte pas les connexions provenant du terminal initiateur correspondant.

Pour chaque connexion rejetée, chaque dispositif 40B à 40E est apte à générer une information de sécurité I. Cette information I comprend notamment une première donnée D₁ correspondant à l'identifiant ID₁ du terminal 12B à 12E correspondant à ce dispositif 40B à 40E, et une deuxième donnée D₂ correspondant à l'identifiant ID₂ du port P₁ à P₃ vers lequel la connexion correspondante a été initiée.

Finalement, chaque dispositif 40B à 40E est apte à ajouter l'information de sécurité I générée dans une base d'informations de sécurité BI et à analyser cette base BI comme ceci sera expliqué par la suite.

La mémoire partagée 42B à 42E de chacun des terminaux 12B à 12E est apte à mémoriser des données informatiques accessibles à l'ensemble des terminaux 12B à 12E via le réseau 10.

Ainsi, chacun de ces terminaux 12B à 12E est apte à émettre des données informatiques vers le terminal 12B à 12E correspondant à cette mémoire 42B à 42E pour y mémoriser ces données informatiques.

En outre, chacun des terminaux 12B à 12E est apte à accéder à cette mémoire partagée 42B à 42E pour lire et/ou traiter des données informatiques déjà mémorisées.

La communication entre les terminaux 12B à 12E pour accéder à la mémoire partagée 42B à 42E de l'un d'entre eux, est conforme par exemple à la technologie « pair à pair » (P2P de l'anglais « peer to peer ») connue en soi. Dans ce cas, l'ensemble des mémoires partagées 42B à 42E forme une mémoire commune pour les terminaux 12B à 12E connue également sous le terme « cache distribué ».

La mémoire partagée 42B à 42E de chacun des terminaux 12B à 12E permet de mémoriser en particulier, au moins une partie de la base d'informations de sécurité BI constituée des informations de sécurité I ajoutées par les dispositifs d'analyse 40B à 40E.

La base d'informations de sécurité BI est illustrée schématiquement sur la figure 4 et comprend notamment un graphe de correspondance G. Ce graphe G comporte des noeuds du premier type N₁ et du deuxième type N₂, et des arêtes reliant des noeuds des types différents.

Les noeuds du premier type N₁ correspondent aux premières données D₁ de l'ensemble des informations de sécurité I ajoutées par les dispositifs 40B à 40E, et les noeuds du deuxième type N₂ correspondent aux deuxièmes données D₂ de ces informations.

Chaque arête entre un noeud du premier type N₁ et un noeud du deuxième type N₂ correspond à une information de sécurité I ajoutée et contenant les première D₁ et deuxième D₂ données associées respectivement à ces noeuds du première N₁ et du deuxième N₂ types.

Ainsi, sur la figure 4, les noeuds ID₁(12B), ID₁(12C), ID₁(12D) et ID₁(12E) du premier type N₁ correspondent aux identifiants ID₁ des terminaux 12B à 12E, les noeuds ID₂(P₁), ID₂(P₂) et ID₂(P₃) du deuxième type N₂ correspondent aux identifiants ID₂ des ports P₁ à P₃, et les arêtes 51 à 54 correspondent aux informations de sécurité I associées respectivement à une connexion rejetée vers le port P₂ du terminal 12B, à une connexion rejetée vers le port P₁ du terminal 12A, à une connexion rejetée vers le port P₃ du terminal 12D et à une connexion rejetée vers le même port du terminal 12E.

Chaque ensemble de noeuds reliés via une ou plusieurs arêtes du graphe de correspondance G forme une composante connexe de ce graphe G. Un noeud isolé forme aussi une composante connexe.

Ainsi, sur la figure 4, les noeuds ID₁(12B), ID₁(12C), ID₂(P₁) et ID₂(P₂) forment la composante connexe 61, et les noeuds ID₁(12D), ID₁(12E) et ID₂(P₃) forment la composante connexe 62.

En complément, la base d'informations de sécurité BI comprend en outre des métadonnées 58 en relation avec les connexions rejetées. Ces métadonnées 58 comprennent par exemple le nombre d'occurrences d'une même information de sécurité I dans la base d'informations BI, la date d'ajout de chaque occurrence de cette information de sécurité I et/ou l'identifiant ID₁ du terminal initiateur de la connexion rejetée correspondant à chaque occurrence de cette information de sécurité I.

Encore en complément, les métadonnées 58 comprennent en outre l'entête des paquets correspondant aux connexions rejetées.

La figure 4 illustre un organigramme des étapes principales du procédé de détection de balayage de ports non-autorisé 100.

Initialement, chaque terminal de l'ensemble des terminaux 11, 12A à 12E est raccordé au réseau 10 et apte à initier une connexion avec l'un des autres terminaux 11, 12A à 12E.

Lors de l'étape 110, chacun des dispositifs d'analyse 40B à 40E détecte chaque connexion initiée par un terminal initiateur 11, 12A à 12E, vers l'un des ports P₁ à P₃ du terminal 11, 12A à 12E correspondant à ce dispositif d'analyse 40B à 40E.

Ainsi, lorsque par exemple, la connexion est initiée selon le protocole TCP/IP par un terminal initiateur 11, 12A à 12E, par exemple par le terminal 11, celui-ci émet vers un port P₁ à P₃, par exemple vers le port P₃, d'un terminal récepteur 12B à 12E, par exemple du terminal 12C, des données informatiques comportant un paquet du type « SYN ».

Ce paquet est reçu par le logiciel de pilotage 36 du terminal 12B qui avertit alors le dispositif d'analyse 40B d'une connexion initiée.

Lors de l'étape 120 suivante, chacun des dispositifs d'analyse 40B à 40E identifie parmi l'ensemble des connexions initiées vers le terminal 12B à 12E correspondant, chaque connexion rejetée par au moins l'un des ports P₁ à P₃ de ce terminal.

Ainsi, dans l'exemple mentionné ci-dessus, lorsque le port P₃ du terminal récepteur 12C est dans l'état fermé, le logiciel de pilotage 38 émet vers le terminal initiateur 11 des données informatiques comportant un paquet du type « RST » (« reset ») signifiant le rejet de la connexion initiée et en avertit le dispositif d'analyse 40C.

En variante, le logiciel de pilotage 38 ne répond pas au terminal initiateur 11 ce qui signifie aussi le rejet de la connexion initiée.

Lors de l'étape 130 suivante, pour chaque connexion rejetée, le dispositif d'analyse 40B à 40E correspondant génère une information de sécurité I. Cette information I comprend notamment une première donnée D₁ correspondant à l'identifiant ID₁ du terminal récepteur 12B à 12E et une deuxième donnée D₂ correspondant à l'identifiant ID₂ du port P₁ à P₃ vers lequel la connexion correspondante a été initiée.

En complément, l'information de sécurité comprend en outre une troisième donnée D₃ correspondant à des métadonnées en relation avec la connexion rejetée. Ainsi, par exemple, ces métadonnées comprennent l'identifiant ID₁ du terminal initiateur ou encore l'entête du paquet de données correspondant à cette connexion rejetée.

Dans l'exemple mentionné ci-dessus, le dispositif d'analyse 40C génère donc une information de sécurité I comprenant une première donnée D₁ correspondant à l'identifiant ID₁ du terminal 12C et une deuxième donnée D₂ correspondant à l'identifiant ID₂ du port P₃.

Lors de l'étape 140 suivante, le dispositif d'analyse 40B à 40E correspondant ajoute l'information de sécurité I générée dans la base d'informations de sécurité BI.

Pour ce faire, l'étape 140 comprend plusieurs sous-étapes décrites ci-dessous.

Lors de la sous-étape 141, le dispositif d'analyse 40B à 40E correspondant détermine si le graphe de correspondance G contient déjà un noeud du premier type N₁ correspondant à la première donnée D₁ de l'information de sécurité I générée. Si ce n'est pas le cas, le dispositif d'analyse 40B à 40E correspondant ajoute un nouveau noeud du premier type N₁ correspondant à la première donnée D₁ dans le graphe G lors de l'étape 142.

Lors de la sous-étape 143 suivante, le dispositif d'analyse 40B à 40E correspondant détermine si le graphe de correspondance contient déjà un noeud du deuxième type N₂ correspondant à la deuxième donnée D₂ de l'information de sécurité I générée. Si ce n'est pas le cas, le dispositif d'analyse 40B à 40E correspondant ajoute un nouveau noeud du deuxième type N₂ correspondant à la deuxième donnée D₂ dans le graphe G lors de l'étape 144.

Lors de la sous-étape 145 suivante, le dispositif d'analyse 40B à 40E identifie une première composante connexe C₁ du graphe de correspondance G contenant un noeud du premier type N₁ formé par la première donnée D₁.

Lors de la sous-étape 146 suivante, le dispositif d'analyse 40B à 40E identifie une deuxième composante connexe C₂ du graphe de correspondance G contenant un noeud du deuxième type N₂ formé par la deuxième donnée D₂.

Lors de la sous-étape 147 suivante, le dispositif d'analyse 40B à 40E compare la première C₁ et la deuxième C₂ composantes connexes identifiées.

Si les composantes C₁ et C₂ sont différentes, le dispositif d'analyse 40B à 40E fusionne ces composantes connexe en créant une arête entre les noeuds formés par la première donnée D₁ et la deuxième donnée D₂ lors de l'étape 148.

Dans le cas contraire, lors de l'étape 149, le dispositif d'analyse 40B à 40E crée une arête entre les noeuds formés par la première donnée D₁ et la deuxième donnée D₂ si celle-ci n'existe pas encore.

En complément, le dispositif d'analyse 40B à 40E incrémente d'un le nombre d'occurrences de l'information de sécurité I dans les métadonnées 58 et y ajoute en plus la troisième donnée D₃ correspondant à l'identifiant ID₁ du terminal initiateur 11, 12A à 12E et la date d'ajout de cette occurrence.

Ainsi, dans l'exemple mentionné ci-dessus combiné avec l'exemple de l'état courant de la base d'informations de sécurité BI illustré sur la figure 4, le dispositif d'analyse 40C identifie la composante connexe 61 contenant le noeud ID₁(12C) correspondant à la première donnée D₁ et la composante connexe 62 contenant le noeud ID₂(P₃) correspondant à la deuxième donnée D₂. Comme les composantes 61 et 62 sont distinctes, le dispositif d'analyse 40C fusionne les composantes 61 et 62 en créant une nouvelle arête A.

En complément, le dispositif d'analyse 40C ajoute dans les métadonnées 58 la troisième donnée D₃ correspondant à l'identifiant ID₁ du terminal 11.

Lors de l'étape 150 suivante, le dispositif d'analyse 40B à 40E correspondant analyse la base d'informations de sécurité BI modifiée lors de l'étape 148 ou de l'étape 149 pour déterminer des balayages de ports non-autorisés dans le réseau 10.

Cette analyse comprend notamment la comparaison du nombre de noeuds total dans la composante connexe obtenue après la fusion des composantes C₁ et C₂ lors de l'étape 148 si celle-ci a été réalisé, avec un seuil prédéterminé.

Ainsi, lorsque le nombre de noeuds total dans cette composante connexe dépasse le seuil prédéterminé, le dispositif d'analyse 40B à 40E lève une alerte signalant un éventuel balayage de ports non-autorisé dans le réseau 10.

En variante, cette analyse comprend la comparaison du nombre total d'arêtes dans la composante connexe obtenue après la fusion des composantes C₁ et C₂ lors de l'étape 148 ou modifiée lors de l'étape 149, avec un seuil prédéterminé.

En variante ou en complément, cette analyse comprend le calcul d'une valeur d'alerte et la comparaison de cette valeur avec un seuil prédéterminé. La valeur d'alerte est une fonction du nombre total d'arêtes et/ou de noeuds dans la composante connexe obtenue lors de l'étape 148 ou modifiée lors de l'étape 149. En complément, la valeur d'alerte est une fonction en outre d'au moins certaines des données contenues dans les métadonnées 58 comme par exemple les identifiants ID₁ des terminaux initiateurs.

Le procédé 100 est mis en oeuvre par chacun des dispositifs d'analyse 40B à 40E en temps réel ou avec des intervalles temporels prédéterminés.

Selon un aspect avantageux de l'invention, le procédé 100 comprend en outre une étape 160 mis à jour de la base d'informations de sécurité BI permettant notamment d'effacer des informations de sécurité I les plus anciennes contenues dans cette base.

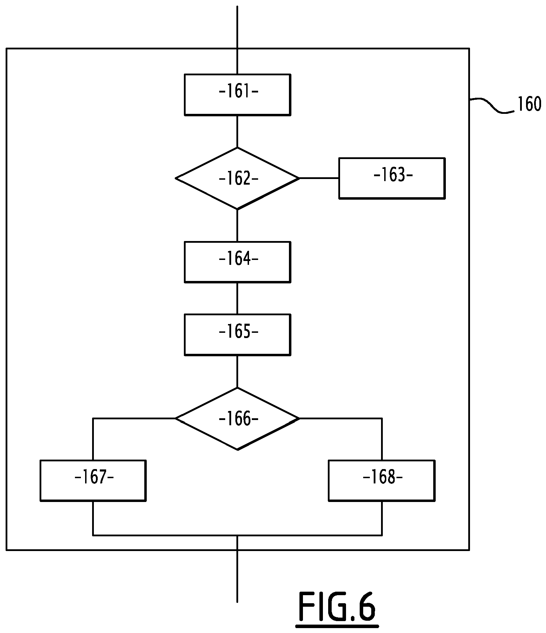

Cette étape 160 est mise en oeuvre par l'un des dispositifs d'analyse 40B à 40E et comprend plusieurs sous-étapes décrites ci-dessous. L'organigramme de l'étape 160 est présenté sur la figure 6.

Lors de la sous-étape 161, le dispositif d'analyse 40B à 40E correspondant identifie l'occurrence d'une information de sécurité I la plus ancienne contenue dans la base d'informations I. Pour ce faire, le dispositif d'analyse 40B à 40E analyse les dates d'ajout des occurrences de chaque information de sécurité I à partir des métadonnées 58.

Lors de la sous-étape 162 suivante, si le nombre d'occurrences de l'information de sécurité I correspondant à l'occurrence la plus ancienne identifiée lors de l'étape 161, est supérieur à 1, le dispositif d'analyse 40B à 40E correspondant décrémente d'un ce nombre d'occurrence et efface toutes les métadonnées en relation avec l'occurrence la plus ancienne lors de l'étape 163.

Dans le cas contraire, l'occurrence la plus ancienne identifiée correspond à la seule occurrence de l'information de sécurité I correspondante, et le dispositif d'analyse 40B à 40E efface donc cette information de sécurité I de la base d'informations BI.

Pour ce faire, lors de la sous-étape 164, le dispositif d'analyse 40B à 40E identifie la composante connexe contenant un noeud du premier type N₁ et un noeud du deuxième type N₂ correspondant respectivement à la première D₁ et à la deuxième D₂ données de cette information de sécurité I.

Lors de la sous-étape 165 suivante, le dispositif d'analyse 40B à 40E correspondant supprime l'arête correspondant à cette information de sécurité I.

Lors de la sous-étape 166 suivante, le dispositif d'analyse 40B à 40E correspondant analyse la connexité des noeuds dans la composante connexe après la suppression de l'arête lors de l'étape précédente.

Si chaque noeud de cette composante est toujours relié à chaque noeud par une ou plusieurs arêtes, le dispositif d'analyse 40B à 40E correspondant garde la composante connexe sans modification lors de l'étape 167.

Dans le cas contraire, lors de l'étape 168, le dispositif d'analyse 40B à 40E correspondant crée deux nouvelles composantes connexes dont l'une d'elles contient le noeud correspondant à la première donnée D₁ de l'information de sécurité I et l'autre contient le noeud correspondant à la deuxième donnée D₂ de l'information de sécurité I. Lorsque l'une ou l'autre composante connexe nouvellement créée est constituée d'un seul noeud, le dispositif d'analyse 40B à 40E supprime ce noeud du graphe de correspondance G.

On conçoit alors que la présente invention comporte un certain nombre d'avantages.

Ainsi, selon l'invention, les ressources matérielles utilisées pour détecter des balayages de ports non-autorisés, sont distribuées entre plusieurs terminaux du réseau à protéger.

Ceci permet en particulier de mémoriser une base d'informations de sécurité de taille importante dans les mémoires partagées, et de détecter ainsi des balayages étalés dans le temps.

De plus, les ressources de calcul distribuées entre ces terminaux, permettent d'analyser cette base d'informations de manière particulièrement simple et rapide.

Par ailleurs, le procédé selon l'invention permet de détecter des balayages de ports non-autorisés provenant d'un terminal d'un réseau vers d'autres terminaux du même réseau. Ainsi, dans l'exemple de la figure 1, le procédé mis en oeuvre par les dispositifs d'analyse 40B à 40E terminaux 12B à 12E, permet de détecter des balayages provenant du terminal 12A faisant partie du même réseau privé 16.

Finalement, le procédé selon l'invention permet de compléter les moyens de protection déjà présents dans un réseau informatique et d'augmenter leur efficacité dans la détection des attaques informatiques.

## Revendications

1. Procédé (100) de détection de balayage de ports non-autorisé dans un réseau informatique (10) notamment pour prévenir une attaque informatique, le réseau informatique (10) étant constitué d'une pluralité de terminaux (11, 12A,..,12E) de communication définissant chacun une pluralité de ports (P₁,..,P₃) de communication et aptes à communiquer entre eux via ces ports de communication (P₁,..,P₃), chaque terminal (11, 12A,..,12E) étant associé à un identifiant (ID₁) de terminal unique dans le réseau (10), chaque port (P₁,..,P₃) étant associé à un identifiant (ID₂) de port unique au sein du terminal (11, 12A,..,12E) correspondant,
au moins certains des terminaux (11, 12A,..,12E), dits terminaux initiateurs, étant aptes à initier une connexion informatique avec au moins un autre terminal (11, 12A,..,12E), dit terminal récepteur, via au moins un port (P₁,..,P₃) de ce terminal récepteur (11, 12A,..,12E), chaque terminal récepteur (11, 12A,..,12E) étant apte à rejeter une connexion initiée par un terminal initiateur (11, 12A,..,12E),
le procédé (100) étant mis en oeuvre par des terminaux (12B,..,12E) formant un groupe de terminaux identifié et comportant les étapes suivantes :
- détection (110) par chaque terminal récepteur (12B,..,12E) du groupe, de chaque connexion initiée par un terminal initiateur (11, 12A,..,12E) via au moins un port (P₁,..,P₃) de ce terminal récepteur (12B,..,12E) ;
- identification (120) par chaque terminal récepteur (12B,..,12E) du groupe, de connexions rejetées parmi l'ensemble des connexions initiées ;
- pour chaque connexion rejetée, génération (130) d'une information de sécurité (I) comprenant une première donnée (D₁) et une deuxième donnée (D₂) correspondant respectivement aux identifiants (ID₁, ID₂) du terminal récepteur (12B,..,12E) et de l'un de ses ports (P₁,..,P₃) correspondant à cette connexion rejetée, et ajout (140) de l'information de sécurité (I) générée dans une base (BI) d'informations de sécurité partagée entre les terminaux (12B,..,12E) du groupe ; et
- analyse (150) de la base d'informations de sécurité partagée (BI) pour déterminer des balayages de ports non-autorisés ;
chaque terminal (12B,..,12E) du groupe comporte en outre une unité (24) de mémorisation apte à mémoriser au moins une partie de la base d'informations de sécurité (BI).

2. Procédé (100) selon la revendication 1, dans lequel chaque connexion rejetée correspond à une connexion initiée vers un port (P₁,..,P₃) fermé ou vers un port (P₁,..,P₃) comprenant un filtre refusant la connexion avec le terminal initiateur (11, 12A,..,12E) correspondant.

3. Procédé (100) selon la revendication 1 ou 2, dans lequel la base d'informations de sécurité (BI) est partagée dans le groupe selon la technologie du type « pair à pair » (P2P).

4. Procédé (100) selon l'une quelconque des revendications précédentes, dans lequel la base d'informations de sécurité (BI) comprend un graphe (G) de correspondance dont les noeuds sont formés par les premières données (D₁) et les deuxièmes données (D₂) issues de chaque information de sécurité (I) ajoutée.

5. Procédé (100) selon la revendication 4, dans lequel chaque information de sécurité (I) ajoutée correspond à une arête (51,..,54) entre deux noeuds formés par la première donnée (D₁) et la deuxième donnée (D₂) issues de cette information de sécurité (I), un ensemble de noeuds reliés via une ou plusieurs arêtes formant une composante connexe (C₁, C₂, 61, 62) du graphe de correspondance (G).

6. Procédé (100) selon la revendication 5, dans lequel l'ajout d'une information de sécurité (I) comprend les sous-étapes suivantes :
- création (142) d'un nouveau noeud formé par la première donnée (D₁) de cette information de sécurité (I) si un tel noeud n'existe pas dans le graphe de correspondance (G);
- création (144) d'un nouveau noeud formé par la deuxième donnée (D₂) de cette information de sécurité (I) si un tel noeud n'existe pas dans le graphe de correspondance (G);
- identification (145) d'une première composante connexe (C₁) du graphe de correspondance (G) contenant un noeud formé par la première donnée (D₁) ;
- identification (146) d'une deuxième composante connexe (C₂) du graphe de correspondance (G) contenant un noeud formé par la deuxième donnée (D₂) ;
- si la première composante connexe (C₁) et la deuxième composante connexe (C₂) sont distincts, fusion (148) de la première composante connexe (C₁) avec la deuxième composante connexe (C₂) en créant une arête (A) entre les noeuds formés par la première donnée (D₁) et la deuxième donnée (D₂).

7. Procédé (100) selon la revendication 5 ou 6, dans lequel l'analyse de la base d'informations de sécurité (BI) comprend la détermination du nombre des noeuds d'au moins une composante connexe du graphe de correspondance (G).

8. Procédé (100) selon la revendication 6 et 7, dans lequel l'au moins une composante connexe pour lequel le nombre des noeuds est déterminé, correspond à une composante obtenue après la fusion de la première composante connexe (C₁) et de la deuxième composante connexe (C₂).

9. Procédé (100) selon la revendication 7 ou 8, dans lequel un balayage de ports est déterminé lorsque le nombre de noeuds identifiés est supérieur à un seuil prédéterminé.

10. Procédé (100) selon l'une quelconque des revendications précédentes, dans lequel chaque information de sécurité (I) comprend en outre l'identifiant (ID₁) du terminal initiateur (11, 12A,..,12E) ayant initiée la connexion rejetée correspondante à cette information de sécurité (I).

11. Procédé (100) selon l'une quelconque des revendications précédentes, dans la base d'informations de sécurité (BI) comprend en outre le nombre d'occurrences de chaque information de sécurité (I) dans cette base (BI).

12. Procédé (100) selon l'une quelconque des revendications précédentes, comprenant en outre une étape (160) de mis à jour de la base d'informations de sécurité (BI) permettant d'effacer des informations de sécurité (I) les plus anciennes contenues dans cette base.

13. Produit programme d'ordinateur comportant des instructions logicielles qui, lorsqu'elles sont mises en oeuvre par un ordinateur, mettent en oeuvre le procédé selon l'une quelconque des revendications précédentes.

14. Terminal de communication (12B,..,12E) d'un réseau informatique (10), le terminal (12B,..,12E) définissant une pluralité de ports (P₁,..,P₃) de communication et apte à communiquer avec d'autres terminaux (12B,..,12E) du réseau (10) via ces ports de communication (P₁,..,P₃) ;
le terminal (12B,..,12E) étant associé à un identifiant (ID,) de terminal unique dans le réseau (10), chaque port (P₁,..,P₃) étant associé à un identifiant (ID₂) de port unique au sein du terminal (12B,..,12E),
le terminal (12B,..,12E) étant un terminal récepteur apte à rejeter une connexion initiée par un terminal initiateur (11, 12A,..,12E) apte à initier une connexion informatique avec ce terminal récepteur (12B,..,12E), via au moins un port (P₁,..,P₃) de ce terminal récepteur (12B,..,12E) ;
le terminal (12B,..,12E) comprenant un dispositif (40B,..,40E) d'analyse pour détecter de balayage de ports non-autorisé dans le réseau informatique (10) notamment pour prévenir une attaque informatique,
le dispositif d'analyse (40B,..,40E) étant apte :
- à détecter chaque connexion initiée par un terminal initiateur (11, 12A,..,12E) via au moins un port (P₁,..,P₃) de ce terminal récepteur (12B,..,12E) ;
- à identifier des connexions rejetées parmi l'ensemble des connexions initiées ;
- pour chaque connexion rejetée, à générer une information de sécurité (I) comprenant une première donnée (D₁) et une deuxième donnée (D₂) correspondant respectivement aux identifiants (ID₁, ID₂) du terminal récepteur (12B,..,12E) et de l'un de ses ports (P₁,..,P₃) correspondant à cette connexion rejetée, et à ajouter l'information de sécurité (I) générée dans une base (BI) d'informations de sécurité partagée ; et
- à analyser la base d'informations de sécurité partagée (BI) pour déterminer des balayages de ports non-autorisés ;
le terminal (12B,..,12E) comportant en outre une unité (24) de mémorisation apte à mémoriser au moins une partie de la base d'informations de sécurité (BI).

## Patentansprüche

1. Verfahren (100) zum Erkennen nicht autorisierter Port-Scans in einem Computernetzwerk (10), insbesondere zum Verhindern eines Computerangriffs, wobei das Computernetzwerk (10) aus einer Mehrzahl von Kommunikations-Endgeräten (11, 12A, ..., 12E) besteht, die jeweils mehrere Kommunikationsports (P₁, .., P₃) definieren und geeignet sind, über diese Kommunikationsports (P1, .., P3) miteinander zu kommunizieren, wobei jedes Endgerät (11, 12A, ..., 12E)) einem eindeutigen Endgerätidentifikator (ID₁) im Netzwerk (10) zugeordnet ist, wobei jeder Port (P₁, ..., P₃) einem eindeutigen Portidentifikator (ID2) innerhalb des entsprechenden Endgeräts (11, 12A, ..., 12E) zugeordnet ist,
wobei zumindest einige der Endgeräte (11, 12A, ..., 12E), Initiator-Endgeräte genannt, geeignet sind, eine Computerverbindung mit mindestens einem anderen Endgerät (11, 12A, ..., 12E), Empfänger-Endgerät genannt, über mindestens einen Port (P₁, ..., P₃) dieses Empfänger-Endgeräts (11, 12A, ..., 12E) zu initiieren, wobei jedes Empfänger-Endgerät (11, 12A, ..., 12E) geeignet ist, eine von einem Initiator-Endgerät (11, 12A, ..., 12E) initiierte Verbindung abzulehnen,
wobei das Verfahren (100) durch Endgeräte (12B, ..., 12E) implementiert wird, die eine identifizierte Gruppe von Endgeräten bilden, und die folgenden Schritte aufweist:
- Detektion (110), durch jedes Empfänger-Endgerät (12B, .., 12E) der Gruppe, jeder Verbindung, die von einem Initiator-Endgerät (11, 12A, .., 12E) über mindestens einen Port (P1, ..., P3) dieses Empfänger-Endgeräts (12B, .., 12E) initiiert wird;
- Identifizierung (120), durch jedes Empfänger-Endgerät (12B, ..., 12E) der Gruppe, von abgelehnten Verbindungen unter der Menge von initiierten Verbindungen;
- Erzeugen (130) einer Sicherheitsinformation (I) für jede abgelehnte Verbindung, die ein erstes Datenelement (D₁) und ein zweites Datenelement (D₂) aufweist, die jeweilig den Identifikatoren (ID₁, ID₂) des Empfänger-Endgeräts (12B, ..., 12E) und des einen seiner Ports (P₁, ..., P₃) dieser abgelehnten Verbindung entsprechen, und Hinzufügen (140) der erzeugten Sicherheitsinformationen (I) zu einer Sicherheitsinformationsdatenbank (BI), die zwischen den Endgeräten (12B, .., 12E) der Gruppe geteilt wird; und
- Analysieren (150) der geteilten Sicherheitsinformationsdatenbank (BI), um nicht autorisierte Port-Scans zu ermitteln;
wobei jedes Endgerät (12B, .., 12E) der Gruppe ferner eine Speichereinheit (24) aufweist, die geeignet ist, mindestens einen Teil der Sicherheitsinformationsdatenbank zu speichern (BI).

2. Verfahren (100) nach Anspruch 1, wobei jede abgelehnte Verbindung einer Verbindung entspricht, die über einen geschlossenen Port (P₁, ..., P₃) oder über einen Port (P₁, ..., P₃) initiiert wurde, der einen Filter aufweist, der die Verbindung mit dem entsprechenden Initiator-Endgerät (11, 12A, .., 12E) ablehnt.

3. Verfahren (100) nach Anspruch 1 oder 2, wobei die Sicherheitsinformationsdatenbank (BI) in der Gruppe gemäß der Technologie vom "Peer-to-Peer" (P2P) - Typ geteilt wird.

4. Verfahren (100) nach einem der vorhergehenden Ansprüche, wobei die Sicherheitsinformationsdatenbank (BI) einen Korrespondenzgraphen (G) aufweist, dessen Knoten durch die von jeder hinzugefügten Sicherheitsinformation (I) stammenden ersten Datenelemente (D₁) und zweiten Datenelemente (D₂) gebildet werden.

5. Verfahren (100) nach Anspruch 4, wobei jede hinzugefügte Sicherheitsinformation (I) einer Kante (51, ..., 54) zwischen zwei Knoten entspricht, die durch das von dieser Sicherheitsinformation (I) stammenden erste Datenelement (D₁) und das von dieser Sicherheitsinformation (I) stammenden zweite Datenelement (D₂) gebildet werden, wobei eine Menge von Knoten, die über eine oder mehrere Kanten verbunden sind, eine konnexe Komponente (C₁, C₂, 61, 62) des Korrespondenzgraphen (G) bildet.

6. Verfahren (100) nach Anspruch 5, wobei das Hinzufügen von Sicherheitsinformationen (I) die folgenden Unterschritte aufweist:
- Erzeugen (142) eines neuen Knotens, der durch das erste Datenelement (D₁) dieser Sicherheitsinformation (I) gebildet wird, falls ein solcher Knoten nicht im Korrespondenzgraph (G) vorhanden ist;
- Erzeugen (144) eines neuen Knotens, der durch das zweite Datenelement (D₂) dieser Sicherheitsinformation (I) gebildet wird, wenn ein solcher Knoten nicht im Korrespondenzgraph (G) vorhanden ist;
- Identifikation (145) einer ersten konnexen Komponente (C₁) des Korrespondenzgraphen (G), die einen durch das erste Datenelement (D₁) gebildeten Knoten enthält;
- Identifikation (146) einer zweiten konnexen Komponente (C₂) des Korrespondenzgraphen (G), der einen durch den zweiten Datenpunkt (D2) gebildeten Knoten enthält;
- wenn die erste konnexe Komponente (C₁) und die zweite konnexe Komponente (C₂) voneinander unterschiedlich sind, Verschmelzen (148) der ersten konnexen Komponente (C₁) mit der zweiten konnexen Komponente (C₂) durch Erzeugen einer Kante (A) zwischen den Knoten, die durch das erste Datenelement (D1) und das zweite Datenelement (D2) gebildet werden.

7. Verfahren (100) nach Anspruch 5 oder 6, wobei die Analyse der Sicherheitsinformationsdatenbank (BI) das Ermitteln der Anzahl von Knoten von mindestens einer konnexen Komponente des Korrespondenzgraphen (G) aufweist.

8. Verfahren (100) nach Anspruch 6 und 7, wobei die mindestens eine konnexe Komponente, für die die Anzahl von Knoten ermittelt wird, einer Komponente entspricht, die nach der Fusion der ersten konnexen Komponente (C1) und der zweiten konnexen Komponente (C2) erhalten wird.

9. Verfahren (100) nach Anspruch 7 oder 8, wobei ein Portscan ermittelt wird, wenn die Anzahl der identifizierten Knoten größer als ein vorbestimmter Schwellwert ist.

10. Verfahren (100) nach einem der vorhergehenden Ansprüche, wobei jede Sicherheitsinformation (I) des Weiteren den Identifikator (ID₁) des Initiator-Endgeräts (11, 12A, ..., 12E) aufweist, das die dieser Sicherheitsinformation (I) entsprechende abgelehnte Verbindung initiiert hat.

11. Verfahren (100) nach einem der vorhergehenden Ansprüche, in dem die Sicherheitsinformationsdatenbank (BI) ferner die Anzahl des Auftretens jeder Sicherheitsinformation (I) in dieser Datenbank (BI) aufweist.

12. Verfahren (100) nach einem der vorhergehenden Ansprüche, ferner aufweisend einen Schritt (160) des Aktualisierens der Sicherheitsinformationsdatenbank (BI) zum Ermöglichen, dass die ältesten Sicherheitsinformation (I), die in dieser Datenbank enthalten sind, gelöscht werden.

13. Computerprogrammprodukt, aufweisend Softwareanweisungen, die, wenn sie von einem Computer durchgeführt werden, das Verfahren nach einem der vorhergehenden Ansprüche durchführen.

14. Kommunikationsendgerät (12B, ..., 12E) eines Computernetzwerks (10), wobei das Endgerät (12B, ..., 12E) eine Mehrzahl von Kommunikationsports (P₁, ..., P₃) definiert und geeignet ist, über diese Kommunikationsports (P₁, ..., P₃) mit anderen Endgeräten (12B, ..., 12E) des Computernetzwerks (10) zu kommunizieren;
wobei das Endgerät (12B, .., 12E) einem eindeutigen Endgerätidentifikator (ID₁) in dem Netzwerk (10) zugeordnet ist, wobei jeder Port (P₁, ..., P₃) einem eindeutigen Portidentifikator (ID₂) innerhalb des Endgerätes (11, 12A, .., 12E) zugeordnet ist,
wobei das Endgerät (12B, ..., 12E) ein Empfänger-Endgerät ist, das geeignet ist, eine Verbindung abzulehnen, die von einem Initiator-Endgerät (11, 12A, ..., 12E) initiiert wurde, das geeignet ist, eine Computerverbindung mit dem Empfänger-Endgerät (12B, ..., 12E) über mindestens einen Port (P1, .., P3) dieses Empfänger-Endgeräts (12B, ..., 12E) zu initiieren;
wobei das Endgerät (12B, ..., 12E) eine Analysevorrichtung (40B, ..., 40E) zum Erkennen nicht autorisierter Port-Scans in dem Computernetzwerk (10), insbesondere zum Verhindern eines Computerangriffs, aufweist,
wobei die Analysevorrichtung geeignet ist
- zum Detektieren jeder von einem Initiator-Endgerät (11, 12A, ..., 12E) über mindestens einen Port (P₁, ..., P₃) dieses Empfängerendgeräts (12B, .., 12E) initiierten Verbindung;
- zum Identifizieren von abgelehnten Verbindungen unter der Menge von initiierten Verbindungen;
- zum Erzeugen, für jede abgelehnte Verbindung, einer Sicherheitsinformation (I), die ein erstes Datenelement (D₁) und ein zweites Datenelement (D₂) aufweist, die jeweilig den Identifikatoren (ID₁, ID₂) des Empfänger-Endgeräts (12B, ..., 12E) und des einen seiner Ports (P₁, ..., P₃) dieser abgelehnten Verbindung entsprechen, und zum Hinzufügen (140) der erzeugten Sicherheitsinformationen (I) zu einer geteilten Sicherheitsinformationsdatenbank (BI); und
- zum Analysieren (150) der geteilten Sicherheitsinformationsdatenbank (BI), um nicht autorisierte Port-Scans zu ermitteln;
wobei das Endgerät (12B, ..., 12E) ferner eine Speichereinheit (24) aufweist, die geeignet ist, mindestens einen Teil der Sicherheitsinformationsdatenbank zu speichern (BI).

## Claims

1. A method (100) for detecting unauthorized port scanning in a computer network (10) in particular to avoid a computer attack, the computer network (10) being made up of a plurality of communication terminals (11, 12A,..,12E) each defining a plurality of communication ports (P₁,..,P₃) and able to communicate with one another via these communication ports (P₁,..,P₃), each terminal (11, 12A,..,12E) being associated with a unique terminal identifier (ID₁) in the network (10), each port (P₁,..,P₃) being associated with a unique port identifier (ID₂) within the corresponding terminal (11, 12A,..,12E),
at least some of the terminals (11, 12A,..,12E), called initiating terminals, being able to initiate a computer connection with at least one other terminal (11, 12A,..,12E), called receiving terminal, via at least one port (P₁,..,P₃) of the receiving terminal (11, 12A,..,12E), each receiving terminal (11, 12A,..,12E) being able to reject a connection initiated by an initiating terminal (11, 12A,..,12E),
the method (100) being implemented by terminals (12B,..,12E) forming an identified group of terminals and including the following steps:
- detection (110), by each receiving terminal (12B,..,12E) in the group, of each connection initiated by an initiating terminal (11, 12A,..,12E) via at least one port (P₁,..,P₃) of that receiving terminal (12B,..,12E);
- identification (120), by each receiving terminal (12B,..,12E) of the group, of rejected connections among all of the initiated connections;
- for each rejected connection, generating (130) security information (I) comprising a first datum (D₁) and a second datum (D₂) respectively corresponding to the identifiers (ID₁, ID₂) of the receiving terminal (12B,..,12E) and one of its ports (P₁,..,P₃) corresponding to this rejected connection, and adding (140) the generated security information (I) in a security database (BI) shared between the terminals (12B,..,12E) in the group; and
- analyzing (150) the shared security information database (BI) to determine unauthorized port scans;
each terminal (12A,..,12E) of the group further including a storage unit (24) able to store at least part of the security information database (BI).

2. The method (100) according to claim 1, wherein each rejected connection corresponds to an initiated connection toward a closed port (P₁,..,P₃) or toward a port (P₁,..,P₃) comprising a filter refusing the connection with the corresponding initiating terminal (11, 12A,..,12E).

3. The method (100) according to claim 1 or 2, wherein the security information database (BI) is shared in the group using so-called "peer-to-peer" (P2P) type technology.

4. The method (100) according to any one of the preceding claims, wherein the security information database (BI) comprises a correspondence graph (G) whose nodes are provided by the first data (D₁) and the second data (D₂) from each added item of security information (I).

5. The method (100) according to claim 4, wherein each added item of security information (I) corresponds to an edge (51,..,54) between two nodes formed by the first datum (D₁) and the second datum (D₂) coming from the security information (I), a set of nodes connected via one or more edges (C₁, C₂, 61, 62) forming a connected component of the correspondence graph (G).

6. The method (100) according to claim 5, wherein the addition of an item of security information (I) comprises the following sub-steps:
- creating (142) a new node formed by the first datum (D₁) of this security information item (I) if such a node does not exist in the correspondence graph (G);
- creating (144) a new node formed by the second datum (D₂) of this security information item (I) if such a node does not exist in the correspondence graph (G);
- identifying (145) a first connector component (C₁) of the correspondence graph (G) containing a node formed by the first datum (D₁);
- identifying (146) a second connector component (C₂) of the correspondence graph (G) containing a node formed by the second datum (D2);
- if the first component (C₁) and the second connected component (C₂) are different, merging (148) the first connected component (C₁) with the second connected component (C₂) by creating an edge (A) between the nodes formed by the first datum (D₁) and the second datum (D₂).

7. The method (100) according to claim 5 or 6, wherein the analysis of the security information database (BI) comprises determining the number of nodes of at least one connector component of the correspondence graph (G).

8. The method (100) according to claim 6 and 7, wherein the at least one connector component for which the number of nodes is determined corresponds to a component obtained after merging the first connected component (C₁) and the second connected component (C₂).

9. The method (100) according to claim 7 or 8, wherein port scanning is determined when the number of identified nodes exceeds a predetermined threshold.

10. The method (100) according to any one of the preceding claims, wherein each security information item (I) further comprises the identifier (ID₁) of the initiating terminal (11, 12A,..,12E) having initiated the rejected connection corresponding to the security information (I).

11. The method (100) according to any one of the preceding claims, wherein the security information database (BI) further comprises the number of occurrences of each security information item (I) in that database (BI).

12. The method (100) according to any one of the preceding claims, further comprising a step (160) for updating the security information database (BI) in particular making it possible to erase the oldest security information (I) contained in that database.

13. A computer program product comprising software instructions which, when implemented by a computer, carry out the method according to any one of the preceding claims.

14. A communication terminal (12B,..,12E) in a computer network (10), the terminal (12B,..,12E) defining a plurality of communication ports (P₁,..,P₃) and being able to communicate with other terminals (12B,..12E) in the network (10) via these communication ports (P₁,..,P₃), the terminal (11, 12A,..,12E) being associated with a unique terminal identifier (ID₁) in the network (10), each port (P₁,..,P₃) being associated with a unique port identifier (ID₂) within the terminal (11, 12A,..,12E),
the terminal (12B,..,12E) being a receiving terminal able to reject a connection initiated by an initiating terminal (11, 12A,..,12E) able to initiate a computer connection with this receiving terminal (12B,..,12E), via at least one port (P1,..,P3) of this receiving terminal (12B,..,12E) ;
the terminal (12B,..12E) comprising an analysis device (40B,..,40E) for detecting unauthorized port scanning in the computer network (10) in particular to avoid a computer attack,
the analysis device (40B,..,40E) being able to:
- detect each connection initiated by an initiating terminal (11, 12A,..,12E) via at least one port (P₁,..,P₃) of that receiving terminal (12B,..,12E);
- identifying connections among all of the initiated connections;
- for each rejected connection, generating security information (I) comprising a first datum (D₁) and a second datum (D₂) respectively corresponding to the identifiers (ID₁, ID₂) of the receiving terminal (12B,..,12E) and one of its ports (P₁,..,P₃) corresponding to this rejected connection, and adding the generated security information (I) in a shared security database (BI); and
- analyzing the shared security information database (BI) to determine unauthorized port scans,
the terminal (12A,..,12E) further including a storage unit (24) able to store at least part of the security information database (Bl).
